(19) Europäisches Patentamt
European Patent Office
Office européen des brevets

(11) **EP 3 417 091 B1**

(12) **EUROPEAN PATENT SPECIFICATION**

(45) Date of publication and mention
of the grant of the patent:
**16.11.2022 Bulletin 2022/46**

(51) International Patent Classification (IPC):
**C23F 11/12** (2006.01)　　**C23F 11/10** (2006.01)
**C09K 8/54** (2006.01)　　**C10G 75/02** (2006.01)
**C23F 11/173** (2006.01)　　**C09K 5/20** (2006.01)
**C09K 5/10** (2006.01)

(21) Application number: **17706202.3**

(22) Date of filing: **17.02.2017**

(52) Cooperative Patent Classification (CPC):
**C23F 11/10; C09K 5/10; C09K 8/54; C10G 75/02;**
**C23F 11/128;** C09K 2208/32; C23F 11/173

(86) International application number:
**PCT/EP2017/053603**

(87) International publication number:
**WO 2017/140836 (24.08.2017 Gazette 2017/34)**

(54) **CORROSION INHIBITOR COMPRISING COMPLEX OLIGOMERIC STRUCTURES DERIVED FROM VEGETABLE OILS**

KORROSIONSHEMMER MIT KOMPLEXEN OLIGOMEREN STRUKTUREN AUS PFLANZENÖLEN

INHIBITEUR DE CORROSION COMPORTANT DES STRUCTURES OLIGOMÈRES COMPLEXES DÉRIVÉES D'HUILES VÉGÉTALES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.02.2016 IT UB20160866**

(43) Date of publication of application:
**26.12.2018 Bulletin 2018/52**

(73) Proprietor: **Versalis S.p.A.**
**20097 San Donato Milanese (MI) (IT)**

(72) Inventors:
• **LIMA, Romano**
**48010 Russi (RA) (IT)**
• **CASALINI, Alessandro**
**46100 Mantova (IT)**
• **PALUMBO, Antonio**
**02100 Rieti (IT)**
• **RIVICI, Giovanni**
**02044 Forano (RI) (IT)**

(74) Representative: **Cernuzzi, Daniele et al**
**Studio Torta S.p.A.**
**Via Viotti, 9**
**10121 Torino (IT)**

(56) References cited:
**WO-A1-2008/138892　　WO-A1-2015/062656**
**WO-A1-2015/088893　　DE-A1- 3 203 491**
**JP-A- S51 131 504**

**Description**

The present invention relates to a corrosion inhibitor comprising complex oligomeric structures derived from vegetable oils.

More particularly, the present invention relates to a corrosion inhibitor comprising from 1% by weight to 80% by weight, preferably from 2% by weight to 35% by weight, relative to the total weight of said corrosion inhibitor, of complex oligomeric structures derived from vegetable oils, said complex oligomeric structures being of the ester type comprising: (A) long chain hydroxy acids with at least one secondary hydroxyl group; (B) medium-long chain alpha-omega diacids and optionally (C) long chain monoacids, said structures also containing free acid groups or their esters with mono- and polyalcohols. Said corrosion inhibitor may advantageously be used in the oil or gas production field, in particular for protecting against corrosion drilling systems, crude oil extraction plants, pipelines for transporting liquid hydrocarbons (for example, oil, crude oils and refining products or petrochemical products), storage containers of said liquid hydrocarbons, refining plants (including cooling and refrigeration systems), wastewater treatment plants from industrial processes. Moreover, said corrosion inhibitor may advantageously be used for protecting against corrosion ferrous or non-ferrous metal surfaces that come in contact with corrosive fluids, both fluids based on water or on water/glycols and gaseous fluids (for example, cylinder heads and radiators).

Consequently, the present invention also relates to the use of said corrosion inhibitor in the oil or gas production field, in particular in drilling systems, in crude oil extraction plants, in pipelines for transporting liquid hydrocarbons (for example, oil, crude oils and refining products or petrochemical products), in storage containers of said liquid hydrocarbons, in refining plants (including cooling and refrigeration systems), in wastewater treatment plants from industrial processes; and to the use of said corrosion inhibitor in ferrous or non-ferrous metal surfaces that come in contact with corrosive fluids, both fluids based on water or on water/glycols and gaseous fluids (for example, cylinder heads and radiators).

The phenomenon of corrosion is one of the most common problems in the field of oil and gas production, and is the result of chemical or electrochemical reactions with the environment.

Corrosion occurs in various forms, depending on its causes. For example, corrosion may be due to the use of the drilling fluids, which are saline solutions of various compositions, generally aqueous solutions, which behave in the manner of an electrolyte; alternatively, it may be due to the crude oil extracted and to formation water, which generally contain inorganic salts such as chlorides (sodium, potassium, magnesium chlorides), sulfates (sodium, potassium, magnesium sulfates) and carbonates (sodium, potassium, magnesium carbonates).

Aqueous systems containing salts may easily undergo electrochemical corrosion that is caused by the action of galvanic cells, which may be formed on a metal surface with passivation defects or surface discontinuities. The effect of said electrochemical corrosion consists chiefly in the formation of small cavities (pitting) in the metal surfaces. Moreover, corrosion may be caused by the presence of carbon dioxide ($CO_2$). Frequently, the corrosion caused by the presence of carbon dioxide ($CO_2$) in oil or gas extraction wells is called "neutral or sweet" corrosion. When dissolved in water, carbon dioxide forms carbonic acid ($H_2CO_3$), which reacts with iron to give iron (II) carbonate ($FeCO_3$) and hydrogen gas ($H_2$) and also reduces the pH of the water, bringing about an increase in the rate of corrosion.

Corrosion may likewise be due to the presence of hydrogen sulfide ($H_2S$): said corrosion, called "sour" corrosion, is more damaging than that caused by the presence of carbon dioxide ($CO_2$). Similarly to carbon dioxide ($CO_2$), hydrogen sulfide ($H_2S$) dissolves in water, reducing the pH and forming iron (II) sulfide (FeS) and hydrogen gas ($H_2$). Iron (II) sulfide (FeS) forms a coating on metal surfaces and initially inhibits sour corrosion; subsequently, however, even slight damage to said coating increases the corrosion. Said sour corrosion causes pitting and is frequently accompanied by cracking in the coatings of the metal surfaces that is due to the production of hydrogen, which can thus penetrate into the interior, causing blistering, rupture and the so-called hydrogen embrittlement. Moreover, corrosion in oil or gas production wells is intensified by the presence of microorganisms such as, for example, bacteria capable of reducing sulfur, which can multiply in the anaerobic conditions present in said wells, and to a greater extent in the presence of fouling due to sedimentation.

The rate of corrosion due to the presence of carbon dioxide ($CO_2$) and hydrogen sulfide ($H_2S$) depends on various factors such as, for example, the oxygen content (the higher the oxygen content, the higher the rate of corrosion) and the temperature (the higher the temperature, the higher the rate of corrosion, which reaches its peak at a temperature of around 70°C): in the absence of corrosion inhibitor, said rate may vary from 1 mm/year to several mm/year.

In order to prevent corrosion, both in the oil or gas production field and in ferrous or non-ferrous metal surfaces that come in contact with corrosive fluids, corrosion inhibitors are therefore used.

For example, United States patent US 4,927,669 relates to a method for inhibiting corrosion in equipment for the extraction of oil from oil wells and in pipelines for transporting liquid hydrocarbons which are in contact with an oil/water medium derived from the production well, including coating said equipment and said pipelines with a composition comprising a product obtained from the reaction of unsaturated $C_{18}$ fatty acids with a compound selected from the group comprising maleic anhydride and fumaric acid, in the presence of a catalyst suitable therefor such as, for example, iodine, clay, silica, in which said composition is added to said oil/water medium. The use of the above-mentioned composition is said to give better corrosion resistance than the use of compositions based on dimers/trimers of fatty acids known in the art.

United States patent US 5,507,861 relates to a composition capable of inhibiting corrosion, comprising (a) a monocarboxylic acid selected from the group consisting of heptanoic acid, nonanoic acid, undecanoic acid, and alkali metal and alkaline earth metal salts thereof and (b) a perborate oxidising agent. The above-mentioned composition is said to be capable of improving the corrosion resistance of ferrous and non-ferrous metals.

United States patent US 5,759,485 relates to a water-soluble composition that is capable of inhibiting corrosion, which is obtained by neutralising a $C_{22}$ tricarboxylic acid with aminoethylethanolamine and with a compound selected from the group consisting of imidazoline, amidoamine, or mixtures thereof. The above-mentioned composition is said to be capable of forming coatings with excellent corrosion resistance, even when used in small amounts.

United States patent US 6,117,364 relates to a corrosion inhibitor comprising: cinnemaldehyde and at least one organo-sulfur compound selected from the group consisting of thioethanol, 1-thio-2-butanol, 1,2-ethanedithiol, 1,3-dibutylthiourea, 1,3-diethylthiourea, 2-aminoethanethiol, 2-imino-4-thiobiuret, 2-mercaptobenzothiazole, 2-mercaptothiazoline, ammonium thiosulfate, dithiodipropionic acid, glycol dimercaptoacetate, mercaptosuccinic acid, sodium tetrathionate, tetramethylthiuram monosulfate, thiazolidine, thioglycerol, cysteine, cystine, methionine and thiourea; and in which said corrosion inhibitor does not contain any alkylphenyl ethoxy compounds. The above-mentioned corrosion inhibitor is said to be particularly effective in reducing steel corrosion caused by acids in oil fields.

United States patent application US 2007/0152191 relates to a corrosion inhibitor concentrate, comprising: a diluent; active ingredients present in the following amounts by weight:

(a) about 1% - 40% of a carboxylic acid;
(b) about 1% - 40% of a oxyalkylated carboxylate imidazoline;
(c) about 1% - 40% of a organophosphonate;
(d) about 1% - 40% of an alkanolamine; and
(e) about 1% - 40% of a defoaming component.

The above-mentioned corrosion inhibitor concentrate is said to be particularly effective in reducing the corrosion of ferrous or non-ferrous metal surfaces used in the construction of heat transfer systems such as engine blocks and radiators.

International patent application WO 2015/062656 relates to environmental friendly well treatment fluids comprising water and/or an organic phase and an ester obtainable by reacting a polycarboxylic acid with a hydroxy monocarboxylic acid. The invention also relates to the use of said ester as viscosifier and/or corrosion inhibitor for a well treatment fluid and preferably for a well treatment fluid for offshore well drilling.

International patent application WO 2014/178737 relates to a corrosion inhibitor comprising:

- component a) in the amount ranging from 0.155% by weight to 85% by weight, preferably from 1.55% by weight to 51% by weight, produced by specific processes of neutralising the new mixture of imidazoline derivatives listed there;
- component b), which is selected from ethoxylated fatty amines in an amount ranging from 0.01% by weight to 20% by weight;
- optionally component c), which is selected from aliphatic polyols in an amount ranging from 0.1% by weight to 50% by weight;
- component d), which is selected from aliphatic alcohols, optionally with the addition of water, in an amount ranging from 15% by weight to 99.6% by weight;
- optionally component e), which is selected from anti-foaming agents, in an amount ranging from 0.01% by weight to 2% by weight.

The above-mentioned corrosion inhibitor is said to be useful in corrosion protection of equipment for the extraction of crude oil, pipelines for transporting crude oil, and containers for the storage of crude oil.

However, the above-mentioned corrosion inhibitors may have a number of disadvantages. For example, said corrosion inhibitors may have toxicity problems, both environmentally and in relation to the health of workers, even when used in low concentrations; some are very expensive and so disadvantageous from an economic point of view; others have low levels of efficacy when used in extreme conditions, that is to say at high pressure and high temperature, in the presence of carbon dioxide ($CO_2$) and hydrogen sulfide ($H_2S$), as is frequently the case in systems for extracting and transporting crude oil.

The Applicant thus considered the problem of finding a corrosion inhibitor capable of overcoming the disadvantages indicated above.

The Applicant has found a corrosion inhibitor comprising from 1% by weight to 80% by weight, preferably from 2% by weight to 35% by weight, relative to the total weight of said corrosion inhibitor, of complex oligomeric structures derived from vegetable oils that are capable of overcoming the above-mentioned disadvantages and of being advantageously used in the oil or gas production field. In particular, said corrosion inhibitor may advantageously be used in drilling systems, in crude oil extraction plants, in pipelines for transporting liquid hydrocarbons (for example, oil, crude oils and refining products or petrochemical products), in storage containers of said liquid hydrocarbons, in refining plants (including cooling and refrigeration systems), in wastewater treatment plants from industrial processes. Moreover, said corrosion inhibitor may advantageously be used in the protection against corrosion of ferrous or non-ferrous metal surfaces that come in contact with corrosive fluids, both fluids based on water or on water/glycols and gaseous fluids (for example, cylinder heads and radiators). Moreover, said corrosion inhibitor, being of vegetable origin, has no toxicity, both environmentally and in relation to the health of workers. Moreover, said corrosion inhibitor is capable of improving corrosion resistance in both aqueous fluids and in organic fluids containing water, both in static and in dynamic conditions, in particular in dynamic conditions. Moreover, said corrosion inhibitor tends not to form emulsions or to precipitate in the presence of calcium salts, making its use even more advantageous in the oil or gas production field.

The subject matter of the present invention is thus a corrosion inhibitor comprising from 1% by weight to 80% by weight, preferably from 2% by weight to 35% by weight, relative to the total weight of said corrosion inhibitor, of complex oligomeric structures derived from vegetable oils, said complex oligomeric structures being of the ester type comprising:

(a) from 10 mol% to 90 mol% of $C_{12}$-$C_{24}$ hydroxy acids containing at least one hydroxyl group in the terminal position;
(b) from 10 mol% to 90 mol% of terminal, preferably saturated, $C_6$-$C_{24}$ dicarboxylic acids, esterified with the hydroxyl group of component (a);
(c) from 0 mol% to 20 mol% of monocarboxylic acids having a chain greater than or equal to $C_9$, said structures also containing free acid groups or their esters with mono- and polyalcohols, the sum of (a), (b) and (c) being equal to 100 mol%;

- at least one surfactant selected from: quaternary ammonium compounds such as didecyl dimethyl ammonium carbonate, didecyl dimethyl ammonium bicarbonate, didecyl dimethyl ammonium chloride, or mixtures thereof; basic compounds of pyridinium or derivatives thereof such as cetylpyridinium chloride, or mixtures thereof; betaines or derivatives thereof such as dodecyl dimethyl betaine, undecylene amidopropyl betaine, or mixtures thereof; coco betaines such as cocamidopropyl betaine, or mixtures thereof; sarcosinates such as sodium lauryl sarcosinate, or mixtures thereof; taurates such as sodium methyl cocoyl taurate, or mixtures thereof; ethoxylated alcohols having from 6 to 12 carbon atoms, or mixtures thereof; imidazolines or imidazoline derivatives or their mono- or dicarboxylated salts in which the carboxylated part is derived from saturated or unsaturated fatty acids having from 4 to 22 carbon atoms, or mixtures thereof; compounds derived from amino acid diacetates such as sodium methylglycine diacetate, or mixtures thereof; said surfactant being present in an amount ranging from 2% by weight to 50% by weight, preferably ranging from 4% by weight to 40% by weight, relative to the total weight of said corrosion inhibitor

wherein said complex oligomeric structures have the following characteristics:

- density ranging from 0.95 g/cm$^3$ to 1.05 g/cm$^3$;
- number average molecular weight ($M_n$) ranging from 400 daltons to 1500 daltons;
- ratio of weight average molecular weight ($M_w$) and number average molecular weight ($M_n$) ($M_w/M_n$) ranging from 1 to 10;
- kinematic viscosity ranging from 50 cSt to 1500 cSt;
- acid number ranging from 50 mg KOH/g to 250 mg KOH/g;
- $I_2$ number ranging from 0 $I_2$/100 g to 150 $I_2$/100 g;
- saponification number ranging from 100 mg KOH/g to 450 mg KOH/g;
- hydroxyl number ranging from 10 mg KOH/g to 100 mg KOH/g.

For the purpose of the present description and of the following claims, the definitions of the numerical ranges are always inclusive of the stated values, unless specified otherwise.

For the purpose of the present description and of the following claims, the term "comprising" also includes the terms "substantially consisting of" or "consisting of". The term "long chain hydroxy acids with at least one secondary hydroxyl group" [component (a)] is understood to mean *C12-C24* hydroxycarboxylic acids containing at least one hydroxyl group in the terminal position. 9-Hydroxystearic acid and 10-hydroxystearic acid are particularly preferred.

Preferably, the hydroxy acids according to the present invention have two hydroxyl groups next to one another. Said hydroxy acids may optionally have ketone groups and/or one or more unsaturations along the chain. Where two hydroxyl groups are next to one another, dihydroxypalmitic acid, dihydroxystearic acid, dihydroxyoleic acid, dihydroxyarachidic acid, dihydroxybehenic acid, are preferred. 9,10-Dihydroxystearic acid is particularly preferred.

The term "medium-long chain alpha-omega diacids" [component (b)] is understood to mean terminal, preferably saturated, $C_6$-$C_{24}$ dicarboxylic acids, esterified with the hydroxyl group of component (a). Suberic acid, azelaic acid, brassylic acid, are particularly preferred.

The term "long chain monoacids" [component (c)] is understood to mean monocarboxylic acids having a chain greater than or equal to $C_9$. Palmitic acid, stearic acid, oleic acid, arachidic acid, behenic acid, lignoceric acid, are particularly preferred.

The complex oligomeric structures according to the present invention may optionally contain unsaturations and/or epoxide groups.

According to the present invention, said complex oligomeric structures have the following characteristics:

- density ranging from 0.95 g/cm$^3$ to 1.05 g/cm$^3$;
- number average molecular weight ($M_n$) ranging from 400 daltons to 1500 daltons;
- ratio of weight average molecular weight ($M_w$) and number average molecular weight ($M_n$) ($M_w/M_n$) ranging from 1 to 10;
- kinematic viscosity ranging from 50 cSt to 1500 cSt;
- acid number ranging from 50 mg KOH/g to 250 mg KOH/g;
- $I_2$ number ranging from 0 $I_2$/100 g to 150 $I_2$/100 g;
- saponification number ranging from 100 mg KOH/g to 450 mg KOH/g;
- hydroxyl number ranging from 10 mg KOH/g to 100 mg KOH/g.

The density was determined by weighing 100 ml of said oligomeric structures at 100°C. The weight average molecular weight ($M_w$) and the number average molecular weight ($M_n$) were determined by GPC ("Gel Permeation Chromatography") analysis and by calibration with styrene standards.

The kinematic viscosity was calculated as the ratio between the dynamic viscosity (measured at 100°C using a HAAKE VT 500 rotational viscometer with an MV1 rotor) and the density (measured as indicated above).

The term "acid number" is understood to mean the amount of potassium hydroxide (KOH), expressed in mg, required to neutralise the acidity of 1 g of substance. This was determined according to standard ASTM D974-07 in the presence of phenolphthalein. The degree of unsaturation, expressed by the $I_2$ number, was determined by titration using the Wijs method.

The saponification number, understood to mean the amount of potassium hydroxide (KOH), expressed in mg, that is consumed during the saponification of 1 g of substance, was determined by titration with hydrochloric acid (HCl), in the presence of phenolphthalein, of the potassium hydroxide (KOH) remaining after saponification under reflux for 60 minutes.

The hydroxyl number, or the amount of potassium hydroxide (KOH) equivalent to the hydroxyl groups in 1 g of substance that can undergo acetylation, was determined according to standard ASTM D1957-86.

Said complex oligomeric structures are insoluble in water either at room temperature (25°C) or at higher temperature (60°C - 80°C), but are completely soluble at room temperature (25°C) in aqueous solutions of 5% sodium hydroxide (NaOH), in diethyl ether, in ethyl alcohol, in acetone and in chloroform. Said complex oligomeric structures are moreover characterised by high hydrolytic stability and high viscosity.

More details on said complex oligomeric structures may be found, for example, in Italian patent IT 1403272, the content of which is incorporated herein by reference.

As stated above, the above-mentioned complex oligomeric structures are a by-product derived from a procedure of oxidative cleavage of vegetable oils: more details on said procedure may be found, for example, in international patent applications WO 2008/138892 and WO 2011/080296, the contents of which are incorporated herein by reference.

According to a preferred embodiment of the present invention, the surfactant may be present in an amount ranging from 2% by weight to 50% by weight, preferably ranging from 4% by weight to 40% by weight, relative to the total weight of said corrosion inhibitor.

Examples of surfactants that may be used in the present invention and that are currently commercially available are Carboshield® 1000 from Lonza, Rewoteric® AM B U 185 from Evonik, Empilan® KR 6 from Huntsman, Imidazolines from the OH, NH, CA and DA series from Lakeland, and Protelan MST 35 from Zschimmer & Schwartz.

According to a preferred embodiment of the present invention, said corrosion inhibitor may comprise at least one primary, secondary or tertiary aliphatic amine such as, for example, monoethanolamine, triethanolamine, trimethylamine, or their organic salts, or mixtures thereof.

According to a preferred embodiment of the present invention, said aliphatic amine may be present in an amount ranging from 0.5% by weight to 20% by weight, preferably ranging from 0.8% by weight to 10% by weight, relative to the total weight of said corrosion inhibitor.

It should be noted that, depending on the final use, said corrosion inhibitor may comprise at least one solvent or water.

Consequently, according to an embodiment of the present invention, said corrosion inhibitor may comprise at least one solvent selected, for example, from aromatic hydrocarbons such as, for example, toluene, xylene, trimethylbenzene, methylethyl benzene, n-propyl benzene, iso-propyl benzene, methyl iso-propyl benzene, methyl n-propyl benzene, diethylbenzene, tetramethylbenzene, or mixtures thereof.

According to a preferred embodiment of the present invention, said solvent, when present, may be present in an amount ranging from 50% by weight to 95% by weight, preferably ranging from 60% by weight to 90% by weight, relative to the total weight of said corrosion inhibitor.

Examples of solvents that may be used in the present invention and that are currently commercially available are Solvesso™ 100, Solvesso™ 150, Solvesso™ 150 ND, Solvesso™ 200, Solvesso™ 200 ND, from ExxonMobil.

Alternatively, according to a further embodiment of the present invention, said corrosion inhibitor may comprise water.

According to a preferred embodiment of the present invention, said water, when present, may be present in an amount ranging from 40% by weight to 95% by weight, preferably ranging from 50% by weight to 90% by weight, relative to the total weight of said corrosion inhibitor.

Preferably, said water may be demineralised water, drinking water, or industrial water, that is to say wastewater from industrial processes (for example, from refining plants or petrochemical plants).

According to a further aspect, the present invention moreover relates to the use of said corrosion inhibitor in the oil or gas production field, in particular in drilling systems, in crude oil extraction plants, in pipelines for transporting liquid hydrocarbons (for example, oil, crude oils and refining products or petrochemical products), in storage containers of said liquid hydrocarbons, in refining plants (including cooling and refrigeration systems), in wastewater treatment plants from industrial processes.

According to a further aspect, the present invention moreover relates to the use of said corrosion inhibitor in ferrous or non-ferrous metal surfaces that come in contact with corrosive fluids, both fluids based on water or on water/glycols and gaseous fluids (for example, cylinder heads and radiators).

The present invention will be illustrated below by way of the following examples, which are given purely for indicative purposes and without any restriction on this invention. The complex oligomeric structure used in the examples below was obtained by oxidative cleavage of sunflower oil as described in Example 1 and in Example 2 (it is indeed the residue left in the boiler at the end of Example 2), of international patent application WO 2008/138892 cited above.

EXAMPLE 1 (invention)

Preparation of a corrosion inhibitor solubilised in water for corrosion tests in an aqueous environment

For this purpose, the test was carried out in a dynamic system using a "Rotating Cage" equipment, operating according to standard ASTM G202-12, using rectangular test pieces (dimensions: 7.25 cm x 2.22 cm x 0.32 cm) with a surface area of 38.25 cm$^2$, made from carbon steel C1018 ("Mild Steel"). The test lasted for 24 hours and was carried out at 50°C, at a speed of rotation of 805 rpm. Carbon dioxide ($CO_2$) was used as the conditioning gas, and after 23 hours of testing 500 ppm of hydrogen sulfide ($H_2S$) was added, said hydrogen sulfide being obtained by adding sodium sulfide ($Na_2S$) to the acid environment. At the end of 24 hours, the rate of corrosion of the test pieces was determined, expressed in mpy 0.0254 mm per year (milli-inch per year)

A mixture containing 4% by weight of the complex oligomeric structure obtained as described above, 20% by weight of didecyl dimethyl ammonium carbonate (Carboshield® 1000 from Lonza), 6% by weight of undecylene amidopropyl betaine (Rewoteric® AM B U 185 from Evonik), 4% by weight of ethoxylated C$_9$-C$_{11}$ alcohol (Empilan® KR 6 from Huntsman), 1% by weight of triethanolamine (triethanolamine 85% from Brenntag) and 65% by weight of demineralised water, was prepared in a 300-ml beaker, at room temperature (25°C), under magnetic stirring. 35 ppm of the solution obtained as described above was put inside the above-mentioned "Rotating Cage", which contains as the corrosive solution a 10% solution of sodium chloride (NaCl): at the end of the test the rate of corrosion was 18 mpy.

Example 1a (comparative)

For this purpose, the test was carried out in a dynamic system using "Rotating Cage" equipment operating as described above in Example 1.

A mixture containing 20% by weight of didecyl dimethyl ammonium carbonate (Carboshield® 1000 from Lonza), 6% by weight of undecylene amidopropyl betaine (Rewoteric® AM B U 185 from Evonik), 4% by weight of ethoxylated C$_9$-C$_{11}$ alcohol (Empilan® KR 6 from Huntsman), 1% by weight of triethanolamine (triethanolamine 85% from Brenntag) and 69% by weight of demineralised water was prepared in a 300 ml beaker, at room temperature (25°C), under magnetic stirring. 35 ppm of the solution obtained as described above was put inside the above-mentioned "Rotating Cage", which contains as the corrosive solution a 10% solution of sodium chloride (NaCl): at the end of the test the rate of corrosion was 47 mpy.

For the purpose of comparison, one of the above-mentioned test pieces was put inside the above-mentioned "Rotating Cage", which contains as the corrosive solution a 10% solution of sodium chloride (NaCl), without any corrosion inhibitor: at the end of the test the rate of corrosion was 100 mpy.

As can be seen from the values of the rate of corrosion obtained from the examples given above, the corrosion inhibitor according to the present invention (Example 1) is capable of providing good protection against corrosion, that is to say it has a lower mpy value than that obtained with the corrosion inhibitor of Example 1a (comparative) which lacks the complex oligomeric structure.

EXAMPLE 2a (invention)

Preparation of a corrosion inhibitor solubilised in organic solvent for corrosion tests in kerosene

For this purpose, the test was carried out in a dynamic system using a "Rotating Cage" equipment operating as described above in Example 1.

A mixture containing 9% by weight of the complex oligomeric structure obtained as described above, 86% by weight of hydrocarbon solvent (Solvesso™ 100 from ExxonMobil), 5% by weight of substituted imidazoline (Imidazoline 18 NH), was prepared in a 300 ml beaker, at room temperature (25°C), under magnetic stirring. 35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 8.5 mpy.

EXAMPLE 2b (invention)

Preparation of a corrosion inhibitor solubilised in organic solvent for corrosion tests in kerosene

For this purpose, the test was carried out in a dynamic system using a "Rotating Cage" equipment operating as described above in Example 1.

A mixture containing 13.5% by weight of the complex oligomeric structure obtained as described above, 81.5% by weight of hydrocarbon solvent (Solvesso™ 100 from ExxonMobil), 5% by weight of substituted imidazoline (Imidazoline 18 NH) was prepared in a 300 ml beaker, at room temperature (25°C), under magnetic stirring.

35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 4.4 mpy.

EXAMPLE 2c (invention)

Preparation of a corrosion inhibitor solubilised in organic solvent for corrosion tests in kerosene

For this purpose, the test was carried out in a dynamic system using a "Rotating Cage" equipment operating as described above in Example 1.

A mixture containing 18% by weight of the complex oligomeric structure obtained as described above, 77% by weight of hydrocarbon solvent (Solvesso™ 100 from ExxonMobil), 5% by weight of substituted imidazoline (Imidazoline 18 NH), was prepared in a 300 ml beaker, at room temperature (25°C), under magnetic stirring.

35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 0.7 mpy.

EXAMPLE 2d (invention)

Preparation of a corrosion inhibitor solubilised in organic solvent for corrosion tests in kerosene

For this purpose, the test was carried out in a dynamic system using a "Rotating Cage" equipment operating as described above in Example 1.

A mixture containing 25% by weight of the complex oligomeric structure obtained as described above, 67.5% by weight of hydrocarbon solvent (Solvesso™ 100 from ExxonMobil), 7.5% by weight of substituted imidazoline (Imidazoline 18 NH), was prepared in a 300 ml beaker, at room temperature (25°C), under magnetic stirring. 35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 0.4 mpy.

EXAMPLE 2e (invention)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 18% by weight of the complex oligomeric structure obtained as described above, 77% by weight of hydrocarbon solvent (Solvesso™ 100 from ExxonMobil), 5% by weight of substituted imidazoline (Imidazoline 18 NH), was prepared in a 300 ml beaker, at room temperature (25°C), under magnetic stirring.
17.5 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 10 mpy.

EXAMPLE 2f (invention)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 25% by weight of the complex oligomeric structure obtained as described above, 67.5% by weight of hydrocarbon solvent (Solvesso™ 100 from ExxonMobil), 7.5% by weight of substituted imidazoline (Imidazoline 18 NH), was prepared in a 300 ml beaker, at room temperature (25°C), under magnetic stirring.
17.5 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 5 mpy.

EXAMPLE 2q (comparative)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 85% by weight of hydrocarbon solvent (Solvesso™ 100 from ExxonMobil), 15% by weight of substituted imidazoline (Imidazoline 18 NH), was prepared in a 300 ml beaker, at room temperature (25°C), under magnetic stirring. 35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 10.4 mpy.

EXAMPLE 2h (comparative)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 86% by weight of hydrocarbon solvent (Solvesso™ 100 from ExxonMobil), 5% by weight of substituted imidazoline (Imidazoline 18 NH), 9% by weight of fatty acid dimers (Unidyme™ 18 from Arizona Chemicals), was prepared in a 300 ml beaker, at room temperature (25°C), under magnetic stirring. 35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 2.3 mpy.
For the purpose of comparison, one of the above-mentioned test pieces was put inside the above-mentioned "Rotating Cage", which contains as the corrosive solution a solution comprising 30% by weight of 0.8% sodium chloride (NaCl) and 70% by weight of kerosene, without any corrosion inhibitor: at the end of the test the rate of corrosion was 38 mpy.

As can be seen from the values of the rate of corrosion given above:

- with an increase in the amount of complex oligomeric structure in the corrosion inhibitor according to the present invention [Example 2a (invention), Example 2b (invention), Example 2c (invention) and Example 2d (invention)], there is a corresponding increase in the corrosion protection (lower mpy values);
- even when the amount of corrosion inhibitor added to the "Rotating Cage" is halved [Example 2e (invention) and Example 2f (invention) - 17.5 ppm instead of 35 ppm], good protection against corrosion is observed, which is comparable overall [Example 2e (invention)] with, or indeed better [Example 2f (invention)] than, that obtained using a corrosion inhibitor known in the art [Example 2g (comparative)];
- a comparison between Example 2c (invention) and Example 2d (invention) on the one hand and Example 2h (comparative) on the other shows that the use of the complex oligomeric structure in the corrosion inhibitor according to the present invention [Example 2c (invention) and Example 2d (invention)] gives better protection against corrosion than that obtained using a corrosion inhibitor known in the art [Example 2h (comparative)], with lower costs.

EXAMPLE 2i (invention)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 4.5% by weight of the complex oligomeric structure obtained as described above, 4.5% by weight of fatty acid dimers (Unidyme™ 18 from Arizona Chemicals), 86% by weight of hydrocarbon solvent (Solvesso™ 100 from ExxonMobil), 5% by weight of substituted imidazoline (Imidazoline 18 NH), was prepared in a 300 ml beaker, at room temperature (25°C), under magnetic stirring. 35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 2.9 mpy.

EXAMPLE 2l (comparative)

Preparation of a corrosion inhibitor solubilised in organic solvent for corrosion tests in kerosene

For this purpose, the test was carried out in a dynamic system using a "Rotating Cage" equipment operating as described above in Example 1.
A mixture containing 86% by weight of hydrocarbon solvent (Solvesso™ 100 from ExxonMobil), 5% by weight of substituted imidazoline (Imidazoline 18 NH), 9% by weight of fatty acid dimers (Unidyme™ 18 from Arizona Chemicals), was prepared in a 300 ml beaker, at room temperature (25°C), under magnetic stirring.
35 ppm of the solution obtained as described above was put inside the above-mentioned "Rotating Cage", which contains as the corrosive solution a solution comprising 30% by weight of 0.8% sodium chloride (NaCl) and 70% by weight of kerosene: at the end of the test the rate of corrosion was 5.2 mpy.
As can be seen from the values of the rate of corrosion given above, the addition of the complex oligomeric structure to the corrosion inhibitor according to the present invention [Example 2i (invention)] allows the protection against corrosion to be increased (lower mpy values) by comparison with using a compound known in the art [Unidyme™ 18-Example 2i (comparative)] in the corrosion inhibitor, even in double the amount.

EXAMPLE 3 (invention)

Preparation of a corrosion inhibitor solubilised in water for tests in glycol

For this purpose, the tests were carried out in a static "Linear Polarisation Resistance" (LPR) system using a solution comprising 30% by weight of ethylene glycol and 70% by weight of demineralised water containing 100 ppm of chloride ions.
Each test was carried out, at 85°C, in a 1 litre glass reactor, that was equipped with a probe for determining the "Linear Polarisation Resistance" (LPR), with a continuous air flow equivalent to 50 ml/min introduced through a porous separator for 24 hours, using cylindrical test pieces made from carbon steel C1018 ("Mild Steel"), or cylindrical test pieces made from copper CW004A, or cylindrical test pieces made from aluminium AL6082, each having a surface area of 4.5 cm$^2$. The above-mentioned solution was maintained under magnetic stirring, at 100 rpm, throughout the test: at both the start and the end of the test both the rate of corrosion (CR in mpy) and the polarisation resistance (RP in ohms) were measured and the values obtained are given in Table 1. Moreover, Table 1 gives the values (%) of protection against corrosion, calculated by the following formula (CR = corrosion):

$$Protection\ (\%) = \frac{initial\ CR - final\ CR}{initial\ CR} \times 100.$$

A mixture containing 7.5% by weight of the complex oligomeric structure obtained as described above, 85% by weight of demineralised water, 7.5% by weight of triethanolamine (triethanolamine 85% from Brenntag), was prepared in a 300 ml beaker, at room temperature (25°C), under magnetic stirring.

1200 ppm of the solution obtained as described above was put inside the above-mentioned glass reactor: the values obtained are given in Table 1.

Example 3a (comparative)

A mixture containing 85% by weight of demineralised water, 5% by weight of monoethanolamine (monoethanolamine from Brenntag), 5% by weight of triethanolamine (triethanolamine 85% from Brenntag), 5% by weight of a mixture of dibasic acids (Corfree® M1 from Invista), was prepared in a 300 ml beaker, at room temperature (25°C), under magnetic stirring.

1200 ppm of the solution obtained as described above was put inside the above-mentioned glass reactor: the values obtained are given in Table 1.

TABLE 1

| EXAMPLE | Initial CR (mpy) | Final CR (mpy) | Protection (%) | Initial RP (ohm) | Final RP (ohm) |
|---|---|---|---|---|---|
| 3a (steel) | 4.0 | 1.5 | 62.5 | 750 | 1340 |
| 3a (copper) | 9.4 | 2.3 | 75.5 | 515 | 1430 |
| 3a (aluminium) | 19.8 | 2.5 | 87.3 | 161 | 1020 |
| 3 (steel) | 3.9 | 1.05 | 73 | 830 | 2090 |
| 3 (copper) | 9.5 | 1.8 | 81 | 500 | 1550 |
| 3 (aluminium) | 20 | 2 | 90 | 150 | 1100 |

From the data given in Table 1, it can be seen that the presence of the complex oligomeric structure in the corrosion inhibitor according to the present invention [Example 3 (invention)] allows both better protection against corrosion [higher protection values (%)] and better polarisation resistance (higher final RP values) to be observed than using a compound known in the art [Corfree® M1 from Invista - Example 3a (comparative)] in the corrosion inhibitor.

**Claims**

1. A corrosion inhibitor comprising from 1% by weight to 80% by weight, preferably from 2% by weight to 35% by weight, relative to the total weight of said corrosion inhibitor, of complex oligomeric structures derived from vegetable oils, said complex oligomeric structures being of the ester type comprising:

(a) from 10 mol% to 90 mol% of $C_{12}$-$C_{24}$ hydroxy acids containing at least one hydroxyl group in the terminal position;
(b) from 10 mol% to 90 mol% of terminal, preferably saturated, $C_6$-$C_{24}$ dicarboxylic acids, esterified with the hydroxyl group of component (a);
(c) from 0 mol% to 20 mol% of monocarboxylic acids having a chain greater than or equal to $C_9$, said structures also containing free acid groups or their esters with mono- and polyalcohols, the sum of (a), (b) and (c) being equal to 100 mol%;

- at least one surfactant selected from: quaternary ammonium compounds such as didecyl dimethyl ammonium carbonate, didecyl dimethyl ammonium bicarbonate, didecyl dimethyl ammonium chloride, or mixtures thereof; basic compounds of pyridinium or derivatives thereof such as cetylpyridinium chloride, or mixtures thereof; betaines or derivatives thereof such as dodecyl dimethyl betaine, undecylene amidopropyl betaine, or mixtures thereof; coco betaines such as cocamidopropyl betaine, or mixtures thereof; sarcosinates such as sodium lauryl sarcosinate, or mixtures thereof; taurates such as sodium methyl cocoyl taurate, or mixtures thereof; ethoxylated alcohols having from 6 to 12 carbon atoms, or mixtures thereof; imidazolines or imidazoline derivatives or their mono- or dicarboxylated salts in which the carboxylated part is derived from saturated or unsaturated fatty acids having from 4 to 22 carbon atoms, or mixtures thereof; compounds derived from amino acid diacetates such as sodium methylglycine diacetate, or mixtures thereof; said surfactant being present in an amount ranging from 2% by weight to 50% by weight, preferably ranging from 4% by weight to 40% by weight, relative to the total weight of said corrosion inhibitor

wherein said complex oligomeric structures have the following characteristics:

- density ranging from 0.95 g/cm$^3$ to 1.05 g/cm$^3$;
- number average molecular weight ($M_n$) ranging from 400 daltons to 1500 daltons;
- ratio of weight average molecular weight ($M_w$) and number average molecular weight ($M_n$) ($M_w/M_n$) ranging from 1 to 10;
- kinematic viscosity ranging from 50 cSt to 1500 cSt;
- acid number ranging from 50 mg KOH/g to 250 mg KOH/g;
- I$_2$ number ranging from 0 I$_2$/100 g to 150 I$_2$/100 g;
- saponification number ranging from 100 mg KOH/g to 450 mg KOH/g;
- hydroxyl number ranging from 10 mg KOH/g to 100 mg KOH/g.

2. A corrosion inhibitor according to claim 1, wherein said corrosion inhibitor comprises at least one primary, secondary or tertiary aliphatic amine such as monoethanolamine, triethanolamine, trimethylamine, or their organic salts, or mixtures thereof; said aliphatic amine being present in an amount ranging from 0.5% by weight to 20% by weight, preferably ranging from 0.8% by weight to 10% by weight, relative to the total weight of said corrosion inhibitor.

3. A corrosion inhibitor according to any one of the preceding claims, wherein said corrosion inhibitor comprises at least one solvent selected from aromatic hydrocarbons such as toluene, xylene, trimethylbenzene, methylethyl benzene, n-propyl benzene, *iso*-propyl benzene, methyl iso-propyl benzene, methyl n-propyl benzene, diethylbenzene, tetramethylbenzene, or mixtures thereof; said solvent, when present, being in an amount ranging from 50% by weight to 95% by weight, preferably ranging from 60% by weight to 90% by weight, relative to the total weight of said corrosion inhibitor.

4. A corrosion inhibitor according to any one of claims 1 to 3, wherein said corrosion inhibitor includes water, said water, when present, being present in an amount ranging from 40% by weight to 95% by weight, preferably ranging from 50% by weight to 90% by weight, relative to the total weight of said corrosion inhibitor.

5. Use of the corrosion inhibitor according to any one of the preceding claims in the oil or gas production field, in particular in drilling systems, in crude oil extraction plants, in pipelines for transporting liquid hydrocarbons (such as oil, crude oils and refining products or petrochemical products), in storage containers of said liquid hydrocarbons, in refining plants (including cooling and refrigeration systems), in wastewater treatment plants from industrial processes.

6. Use of the corrosion inhibitor according to any one of claims 1 to 4 in ferrous or non-ferrous metal surfaces that come in contact with corrosive fluids, both fluids based on water or on water/glycols and gaseous fluids (such as cylinder heads and radiators).

**Patentansprüche**

1. Ein Korrosionsinhibitor, der von 1 Gew.-% bis 80 Gew.-%, vorzugsweise von 2 Gew.-% bis 35 Gew.-%, bezogen auf das Gesamtgewicht des genannten Korrosionsinhibitors, komplexe oligomere Strukturen umfasst, die von Pflanzenölen abgeleitet sind, wobei die genannten komplexen oligomeren Strukturen vom Estertyp sind, umfassend:

(a) von 10 bis 90 Mol-% C$_{12}$-C$_{24}$-Hydroxysäuren, die mindestens eine Hydroxylgruppe in der Endstellung enthalten;
(b) von 10 bis 90 Mol-% endständige, vorzugsweise gesättigte C$_6$-C$_{24}$-Dicarbonsäuren, die mit der Hydroxylgruppe der Komponente (a) verestert sind;

(c) von 0 bis 20 Mol-% Monocarbonsäuren mit einer Kette größer oder gleich C$_9$, wobei die genannten Strukturen auch freie Säuregruppen oder ihre Ester mit Mono- und Polyalkoholen enthalten und wobei die Summe von (a), (b) und (c) gleich 100 Mol-% ist;

mindestens ein Tensid *(surfactant),* ausgewählt aus: quaternären Ammoniumverbindungen wie Didecyldimethylammoniumcarbonat, Didecyldimethylammoniumbicarbonat, Didecyldimethylammoniumchlorid oder deren Mischungen; basischen Pyridinium-Verbindungen oder deren Derivaten wie Cetylpyridiniumchlorid oder deren Mischungen; Betainen oder Derivaten davon, wie Dodecyldimethylbetain, Undecylenamidopropylbetain oder Mischungen davon; Coco-Betainen, wie Cocamidopropylbetain oder Mischungen davon; Sarkosinaten, wie Natriumlaurylsarkosinat oder Mischungen davon; Tauraten, wie Natriummethylcocoyltaurat oder Mischungen davon; ethoxylierten Alkoholen mit 6 bis 12 Kohlenstoffatomen oder Mischungen davon; Imidazolinen oder Imidazolin-Derivaten oder ihren mono- oder dicarboxylierten Salzen, bei denen der carboxylierte Teil von gesättigten oder ungesättigten Fettsäuren mit 4 bis 22 Kohlenstoffatomen abgeleitet ist, oder Mischungen davon; von Aminosäurediacetaten abgeleitete Verbindungen, wie Natriummethylglycindiacetat, oder Mischungen davon; wobei das genannte Tensid in einer Menge vorhanden ist im Bereich von 2 Gew.-% bis 50 Gew.-%, vorzugsweise im Bereich von 4 Gew.-% bis 40 Gew.-%, bezogen auf das Gesamtgewicht des genannten Korrosionsinhibitors,
wobei die genannten komplexen oligomeren Strukturen die folgenden Eigenschaften aufweisen:

- Dichte im Bereich von 0,95 g/cm$^3$ bis 1,05 g/cm$^3$;
- Zahlenmittleres Molekulargewicht (M$_n$) im Bereich von 400 Dalton bis 1500 Dalton;
- Verhältnis von gewichtsmittlerem Molekulargewicht (M$_w$) und zahlenmittlerem Molekulargewicht (M$_n$) (M$_w$/M$_n$) im Bereich von 1 bis 10;
- kinematische Viskosität im Bereich von 50 cSt bis 1500 cSt;
- Säurezahl im Bereich von 50 mg KOH/g bis 250 mg KOH/g;
- I$_2$-Zahl im Bereich von 0 I$_2$/100 g bis 150 I$_2$/100 g;
- Verseifungszahl im Bereich von 100 mg KOH/g bis 450 mg KOH/g;
- Hydroxylzahl im Bereich von 10 mg KOH/g bis 100 mg KOH/g.

2. Ein Korrosionsinhibitor nach Anspruch 1, wobei der genannte Korrosionsinhibitor zumindest ein primäres, sekundäres oder tertiäres aliphatisches Amin, wie z.B. Monoethanolamin, Triethanolamin, Trimethylamin oder deren organische Salze oder Mischungen davon, umfasst; wobei das genannte aliphatische Amin in einer Menge vorhanden ist im Bereich von 0,5 Gew.-% bis 20 Gew.-%, vorzugsweise im Bereich von 0,8 Gew.-% bis 10 Gew.-%, bezogen auf das Gesamtgewicht des genannten Korrosionsinhibitors.

3. Ein Korrosionsinhibitor nach irgendeinem der vorstehenden Ansprüche, wobei der genannte Korrosionsinhibitor mindestens ein Lösungsmittel umfasst, das ausgewählt wird aus aromatischen Kohlenwasserstoffen wie Toluol, Xylol, Trimethylbenzol, Methylethylbenzol, n-Propylbenzol, Isopropylbenzol, Methylisopropylbenzol, Methyl-n-Propylbenzol, Diethylbenzol, Tetramethylbenzol oder Mischungen davon; wobei das genannte Lösungsmittel, wenn vorhanden, in einer Menge vorliegt im Bereich von 50 Gew.-% bis 95 Gew.-%, vorzugsweise im Bereich von 60 Gew.-% bis 90 Gew.-%, bezogen auf das Gesamtgewicht des genannten Korrosionsinhibitors.

4. Ein Korrosionsinhibitor nach irgendeinem der Ansprüche von 1 bis 3, wobei der genannte Korrosionsinhibitor Wasser beinhaltet, wobei das genannte Wasser, falls vorhanden, in einer Menge vorliegt im Bereich von 40 Gew.-% bis 95 Gew.-%, vorzugsweise im Bereich von 50 Gew.-% bis 90 Gew.-%, bezogen auf das Gesamtgewicht des genannten Korrosionsinhibitors.

5. Verwendung des Korrosionsinhibitors nach irgendeinem der vorstehenden Ansprüche im Bereich der Öl- oder Gasförderung, insbesondere in Bohrsystemen, in Rohölförderanlagen, in Rohrleitungen für den Transport flüssiger Kohlenwasserstoffe (wie Öl, Rohöle und Raffinerieprodukte oder petrochemische Produkte), in Lagerbehältern für die genannten flüssigen Kohlenwasserstoffe, in Raffinerieanlagen (einschließlich Kühl- und Kältesystemen), in Abwasserbehandlungsanlagen aus industriellen Verfahren.

6. Verwendung des Korrosionsinhibitors nach einem der Ansprüche 1 bis 4 in Eisen- oder Nichteisen-Metalloberflächen, die mit korrosiven Flüssigkeiten in Kontakt kommen, und zwar sowohl mit Flüssigkeiten auf Wasser- oder Wasser/Glykolbasis als auch mit gasförmigen Flüssigkeiten (wie Zylinderköpfe und Kühler).

**Revendications**

1. Inhibiteur de corrosion comprenant de 1% en poids à 80% en poids, préférentiellement de 2% en poids à 35% en poids, par rapport au poids total dudit inhibiteur de corrosion, de structures oligomères complexes dérivées d'huiles végétales, lesdites structures oligomères complexes étant du type ester comprenant :

   (a) de 10 % molaire à 90 % molaire d'hydroxyacides en $C_{12}$ à $C_{24}$ contenant au moins un groupe hydroxyle en position terminale ;
   (b) de 10% molaire à 90% molaire d'acides dicarboxyliques terminaux, préférentiellement saturés, en $C_6$ à $C_{24}$, estérifiés avec le groupe hydroxyle du composant (a) ;
   (c) de 0% molaire à 20% molaire d'acides monocarboxyliques ayant une chaîne supérieure ou égale à $C_9$, lesdites structures contenant également des groupes acides libres ou leurs esters avec des mono- et des polyalcools, la somme de (a), (b) et (c) étant égale à 100 % molaire ;

   - au moins un tensioactif choisi parmi : les composés d'ammonium quaternaire tels que le carbonate de didécyldiméthylammonium, le bicarbonate de didécyldiméthylammonium, le chlorure de didécyldiméthylammonium, ou leurs mélanges ; les composés basiques de pyridinium ou leurs dérivés tels que le chlorure de cétylpyridinium, ou leurs mélanges ; les bétaïnes ou leurs dérivés tels que la dodécyldiméthylbétaïne, l'undécylène amidopropyle bétaïne ou leurs mélanges ; les coco-bétaïnes tels que la bétaïne de cocamidopropyle ou leurs mélanges ; les sarcosinates tels que le lauroylsarcosinate de sodium leurs mélanges ; les taurates tels que le taurate de méthyle cocoyle de sodium ou leurs mélanges ; les alcools éthoxylés présentant de 6 à 12 atomes de carbone, ou leurs mélanges ; les imidazolines ou dérivés d'imidazoline ou leurs sels mono- ou dicarboxylés dans lesquels la partie carboxylée est dérivée d'acides gras saturés ou insaturés présentant de 4 à 22 atomes de carbone, ou leurs mélanges ; les composés dérivés de diacétates d'acides aminés tels que le diacétate de méthylglycine de sodium, ou leurs mélanges ; ledit tensioactif étant présent en une quantité allant de 2 % en poids à 50 % en poids, préférentiellement allant de 4% en poids à 40% en poids, par rapport au poids total dudit inhibiteur de corrosion

   dans lequel lesdites structures oligomères complexes ont les caractéristiques suivantes :

   - masse volumique allant de 0,95 $g/cm^3$ à 1,05 $g/cm^3$ ;
   - masse moléculaire moyenne en nombre (Mn) allant de 400 daltons à 1500 daltons ;
   - rapport entre la masse moléculaire moyenne en masse ($M_W$) et la masse moléculaire moyenne en nombre ($M_n$) ($M_W/M_n$) allant de 1 à 10 ;
   - viscosité cinématique allant de 50 cSt à 1500 cSt ;
   - indice d'acide allant de 50 mg KOH/g à 250 mg KOH/g ;
   - indice de $I_2$ allant de 0 $I_2$/100 g à 150 $I_2$/100 g ;
   - indice de saponification allant de 100 mg KOH/g à 450 mg KOH/g ;
   - indice d'hydroxyle allant de 10 mg KOH/g à 100 mg KOH/g.

2. Inhibiteur de corrosion selon la revendication 1, dans lequel ledit inhibiteur de corrosion comprend au moins une amine aliphatique primaire, secondaire ou tertiaire telle que la monoéthanolamine, la triéthanolamine, la triméthylamine, ou leurs sels organiques, ou leurs mélanges ; ladite amine aliphatique étant présente en une quantité allant de 0,5 % en poids à 20 % en poids, de préférence allant de 0,8% en poids à 10% en poids, par rapport au poids total dudit inhibiteur de corrosion.

3. Inhibiteur de corrosion selon l'une quelconque des revendications précédentes, dans lequel ledit inhibiteur de corrosion comprend au moins un solvant choisi parmi les hydrocarbures aromatiques tels que le toluène, le xylène, le triméthylbenzène, le méthyléthylbenzène, le n-propylbenzène, l'isopropylbenzène, le méthyl isopropylbenzène, le méthyl-n-propylbenzène, le diéthylbenzène, le tétraméthylbenzène, ou leurs mélanges ; ledit solvant, lorsqu'il est présent, étant en une quantité allant de 50% en poids à 95 % en poids, préférentiellement allant de 60% en poids à 90% en poids, par rapport au poids total dudit inhibiteur de corrosion.

4. Inhibiteur de corrosion selon l'une quelconque des revendications 1 à 3, dans lequel ledit inhibiteur de corrosion comporte de l'eau, ladite eau, lorsqu'elle est présente, étant présente en une quantité allant de 40 % en poids à 95 % en poids, allant préférentiellement de 50 % en poids à 90 % en poids, par rapport au poids total dudit inhibiteur de corrosion.

**5.** Utilisation de l'inhibiteur de corrosion selon l'une quelconque des revendications précédentes dans le domaine de la production de pétrole ou de gaz, en particulier dans des systèmes de forage, dans des usines d'extraction de pétrole brut, dans des pipelines de transport d'hydrocarbures liquides (tels que le pétrole, les pétroles bruts et les produits de raffinage ou produits pétrochimiques), dans des conteneurs de stockage desdits hydrocarbures liquides, dans des raffineries (comportant des systèmes de refroidissement et de réfrigération), dans des stations de traitement des eaux usées issues de procédés industriels.

**6.** Utilisation de l'inhibiteur de corrosion selon l'une quelconque des revendications 1 à 4 sur des surfaces métalliques ferreuses ou non ferreuses qui viennent en contact avec des fluides corrosifs, à la fois des fluides à base d'eau ou eau/glycols et des fluides gazeux (tels que des culasses et des radiateurs).

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4927669 A
- US 5507861 A
- US 5759485 A
- US 6117364 A
- US 20070152191 A
- WO 2015062656 A
- WO 2014178737 A
- IT 1403272
- WO 2008138892 A
- WO 2011080296 A